(19) Europäisches Patentamt
European Patent Office
Office européen des brevets

(11) **EP 2 674 788 A2**

(12) **EUROPEAN PATENT APPLICATION**

(43) Date of publication:
**18.12.2013 Bulletin 2013/51**

(51) Int Cl.:
**G01V 1/28** (2006.01) **G01V 1/38** (2006.01)

(21) Application number: **13170268.0**

(22) Date of filing: **03.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2012 US 201213493930**

(71) Applicant: **PGS Geophysical AS**
**1366 Lysaker (NO)**

(72) Inventor: **Borselen, Roald Gunnar van**
**2254BC Voorschoten (NL)**

(74) Representative: **Lord, Michael**
**Gill Jennings & Every LLP**
**The Broadgate Tower**
**20 Primrose Street**
**London EC2A 2ES (GB)**

(54) **Surface-Related Multiple Elimination for Depth-Varying Streamer**

(57) Techniques are described for predicting surface-related multiples from measurements performed at varying depths. One or more operations, such as wavefield decompositions and/or extrapolations, may be performed on scattered wavefield data obtained by underwater sensors at different underwater depths to determine one or more surface-related multiple wavefield contributions at a selected depth or at the different underwater depths where the scattered wavefield data is collected from measurements.

FIG. 5

**Description**

BACKGROUND

In the past few decades, the petroleum industry has invested heavily in the development of marine seismic survey techniques that yield knowledge of subterranean formations beneath a body of water in order to find and extract valuable mineral resources, such as oil and natural gas. High-resolution seismic images of a subterranean formation are essential for quantitative seismic interpretation and improved reservoir monitoring. For a typical marine seismic survey, an exploration-seismology vessel tows one or more seismic sources and one or more streamers below the surface of the water and over a subterranean formation to be surveyed for mineral deposits. The vessel contains seismic acquisition equipment, such as navigation control, seismic source control, seismic receiver control, and recording equipment. The seismic source control causes the one or more seismic sources, which are typically air guns, to produce acoustic impulses at selected times. Each impulse is a sound wave that travels down through the water and into the subterranean formation. At each interface between different types of rock, a portion of the sound wave is refracted, a portion of the sound wave is transmitted, and another portion is reflected back into the body of water to propagate toward the surface. The streamers towed behind the vessel are elongated cable-like structures. Each streamer includes a number of seismic receivers or sensors that detect pressure and/or particle motion changes in the water created by the sound waves reflected back into the water from the subterranean formation and/or from the water surface.

The sound waves that propagate upwardly from the subterranean formation are referred to as "upgoing" wavefields. The sounds waves that propagate downwardly as reflected from the water surface are referred to as "downgoing" wavefields. The sum of these sounds waves is detected by the receivers and converted into seismic signals that are recorded by the recording equipment and processed to produce seismic images that characterize the geological structure and properties of the subterranean formation being surveyed. Pressure and particle motion signals at a constant depth may be combined to derive both the upgoing and the down-going wavefield. However, a variety of factors, including but not limited to active sea currents and weather conditions, affecting data measurements exist in a marine environment. For example, seismic receivers or sensors in the towed streamers may not be located at the same depth when the measurements are being made. As a result, those working in the petroleum industry continue to seek systems and methods to improve the analysis of collected seismic data.

The approaches described in this section are approaches that could be pursued, but not necessarily approaches that have been previously conceived or pursued. Therefore, unless otherwise indicated, it should not be assumed that any of the approaches described in this Background section qualify as prior art merely by virtue of their inclusion in this section.

BRIEF DESCRIPTION OF THE DRAWINGS

In the drawings:
FIG. 1 depicts a schematic view of a marine environment;
FIG. 2A through FIG. 2E depict an example convolution process involving wavefields at specific source and receiver depths;
FIG. 3A through FIG. 3E depict an example convolution process with measurements obtained by receivers located at different depths;
FIG. 4A and FIG. 4B depict example operations to determine/predict upgoing and downgoing surface-related multiples;
FIG. 5 depicts an example process for determining surface-related multiples;
FIG. 6 is a block diagram that depicts an example computer system upon which an embodiment may be implemented;
FIG. 7 depicts an example marine seismic survey environment in which an embodiment may be implemented.
The drawings are not drawn to scale.

DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention. Various aspects of the invention are described hereinafter in the following sections:

    1. OVERVIEW

2. WAVEFIELD MEASUREMENTS AT VARYING DEPTHS
3. CONVOLVING PRESSURE AND VERTICAL VELOCITY WAVEFIELDS
4. CONVOLVING WITH MEASUREMENTS TAKEN AT VARYING DEPTHS
5. EXAMPLE WAVEFIELD COMPUTATION
6. DETERMINING TOTAL SCATTERED MULTIPLES AT VARYING DEPTHS
7. DETERMINING MULTIPLES WITH PRESSURE MEASUREMENTS ONLY
8. PROCESS FLOW
9. EXAMPLE IMPLEMENTATIONS
10. EXTENSIONS AND ALTERNATIVES

1. OVERVIEW

An approach is described for predicting/determining surface-related multiples based on wavefield measurements made at varying depths. As described in more detail hereinafter, the approach may be implemented on an apparatus that includes one or more processors, and one or more storage media storing instructions, which, when processed by the one or more processors, causes performance of one or more operations for predicting or determining surface-related multiples. According to the approach, values of an upgoing wavefield at a plurality of different locations are derived from scattered wavefield data obtained by a plurality of underwater sensors at the plurality of different locations. Here, the plurality of different locations corresponds to a plurality of different underwater depths.

Values of a downgoing wavefield at the plurality of different locations are also derived from the scattered wavefield data at the plurality of different locations. The values of the upgoing wavefield at the plurality of different locations are extrapolated to extrapolated values of the upgoing wavefield at a plurality of first locations. Here, the plurality of first locations may all correspond to a first underwater depth.

The values of the downgoing wavefield at the plurality of different locations are extrapolated to extrapolated values of the downgoing wavefield at a plurality of second locations. Here, the plurality of second locations may all correspond to a second underwater depth.

One or more surface-related multiple wavefield contributions at a plurality of third locations are determined from the extrapolated values of the upgoing wavefield at the plurality of first locations and the extrapolated values of the downgoing wavefield at the plurality of second locations.

Determining the one or more surface-related multiple wavefield contributions at the plurality of third locations comprises convolving the downgoing wavefield at the second underwater depth with the upgoing wavefield at the first underwater depth. The second underwater depth is the same as the source depth of an impulsive source that generates the wavefield data measured/recorded at the plurality of different depths; the downgoing wavefield at the source depth represents a secondary source generated by the primary source (e.g., the impulsive source).

Convolving the downgoing wavefield at the source depth with the upgoing wavefield at the first depth yields wavefield contributions at the first depth from the secondary source. These wavefield contributions at the first depth constitute surface-related multiples at the first depth. The first depth is an arbitrary underwater depth, and may, without limitation, be selected the same as the source depth.

If the plurality of third locations are not at the first depth, extrapolations may be made to derive the one or more surface-related multiple wavefield contributions at the plurality of third locations from the surface-related multiples at the first depth. In some embodiments, the plurality of third locations comprises locations of arbitrary underwater depth. The plurality of third locations may, without limitation, be selected the same as the plurality of different locations at which the wavefield data is collected/recorded.

The scattered wavefield data at the plurality of different locations comprises one or more of (a) measurements of a pressure wavefield and measurements of a velocity wavefield, or (b) only measurements of one of a pressure wavefield or a velocity wavefield.

One of the first underwater depth or the second underwater depth represents one of (a) a source depth at which a source generates one or more scattered fields of which the scattered field data is collected from measurements, or (b) an underwater constant depth below a sea surface.

The values of the upgoing wavefield at the plurality of different locations represent a first set; the values of the downgoing wavefield at the plurality of different locations represent a second set; and at least one of the first set or the second is obtained from the scattered wavefield data at the plurality of different locations at least in part by wavefield decomposition based on one of (a) pressure wavefield data only or (2) both pressure wavefield data and velocity wavefield data.

The plurality of third locations comprises one or more of (a) locations at one of the first underwater depth or the second underwater depth, or (b) the plurality of different locations.

The one or more surface-related multiple wavefield contributions at a plurality of third locations comprise upgoing surface-related multiple wavefield contributions at the plurality of third locations and downgoing surface-related multiple wavefield contributions at the plurality of third locations. The downgoing surface-related multiple wavefield contributions are derived by extrapolating upgoing surface-related multiple wavefield contributions to a plurality of fourth locations. The plurality of fourth locations includes mirrored positions of the plurality of third locations in relation to a horizontal reference surface approximating a sea surface.

## 2. WAVEFIELD MEASUREMENTS AT VARYING DEPTHS

Embodiments include a method to compute 3D Surface-Related Multiple Prediction (SRMP) multiples using multi-component sensor data that have been acquired with depth varying streamers. In some embodiments, single sensor streamers may also be used, if certain assumptions are made with respect to the marine environment from which sensor data have been acquired. For example, the flat sea surface assumption may be made, and a reflection coefficient of -1 may be assumed at the free surface.

Measurements of a particle velocity wavefield at a particular location may be acquired by one or more velocity sensors. As used herein, a velocity sensor refers to a sensor configured to directly or indirectly measure particle velocities - for example, as a function of time in one or more time intervals - in one or more spatial directions at a location (e.g., the sensor's location), and may comprise one or more of a variety of sensor components measuring displacements, velocities and accelerations. In some embodiments, motion sensors such as geophones or accelerometers may be used to perform the particle velocity measurements.

Measurements of a pressure wavefield may be performed using a pressure sensor. As used herein, a pressure sensor refers to a sensor configured to directly or indirectly measure pressure - for example, as a function of time in one or more time intervals - at a location (e.g., the sensor's location), and may comprise one or more of a variety of sensor components measuring pressure, such as hydrophones.

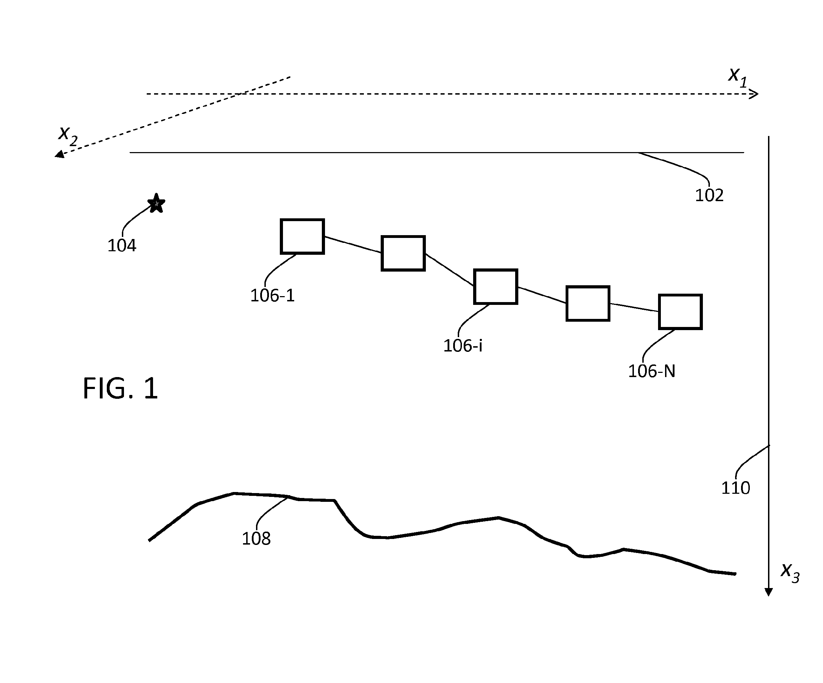

FIG. 1 depicts a schematic view of a marine environment. A seismic source 104 represents an appropriate submerged seismic source, which may be activated to generate an acoustic wavefield. Seismic source 104 may be towed by a ship or otherwise disposed in the marine environment. The seismic source generating the wavefield may be one or more of a variety of types, including but not limited to a small explosive charge, an electric spark or arc, a marine vibrator, and a seismic source gun. The seismic source gun may be a water gun, a vapor gun, or an air gun. A marine seismic source may comprise one or more source elements in a source configuration. The seismic source 104 may, without limitation, generate a short-duration impulse.

In some embodiments, one or more streamers may be towed from a ship. As depicted in FIG. 1, a streamer may comprise one or more underwater receivers (e.g., 106-1, ..., 106-i, ..., 106-N; N is a positive integer greater than one). Thus, a plurality of underwater receivers may be deployed with the one or more streamers in the body of water between a sea surface 102 and a sea floor 108.

The streamers may spread out in directions substantially transverse to the longitudinal directions of the streamers and substantially vertical to a direction $x_3$. The $x_3$ direction is a direction of a corresponding $x_3$-axis 110 that measures depths below a horizontal reference plane, which may be spanned-up by two horizontal directions $x_1$ and $x_2$, as illustrated in FIG. 1. When a flat sea surface assumption applies to some, but not necessarily all, operations performed using techniques as described herein, the sea surface 102 may be approximated by the horizontal reference plane. Without loss of generality, the $x_3$ value (or depth) at the horizontal reference plane may be set to zero.

In some embodiments, each receiver in the plurality of receivers comprises at least one velocity sensor and at least one pressure sensor collocated at that receiver. In some embodiments, each receiver in the plurality of receivers comprises only one type of receiver. For example, a receiver may comprise at least one pressure sensor but no velocity sensor.

Receivers, as deployed by the streamers, may be spaced regularly or irregularly at a plurality of different locations inside the streamers along the longitudinal directions of the streamers. The plurality of different locations forms an acquisition surface. In some embodiments, the plurality of different location corresponds to a plurality of different depths; thus, the acquisition surface may not be a horizontal plane.

In embodiments in which the plurality of receivers comprise velocity sensors, the velocity sensors may be configured to sense directly or indirectly a vertical velocity wavefield $v_{x3}$. In some embodiments, direct velocity measurements by a velocity sensor may be performed in a normal direction of the acquisition surface at the velocity sensor's location. In these embodiments, velocity measurements in normal directions at the plurality of different locations where the receivers are located may be spatially transformed or projected to derive a vertical velocity wavefield $v_{x3}$.

## 3. CONVOLVING PRESSURE AND VERTICAL VELOCITY WAVEFIELDS

In some embodiments, surface-related wavefield multiples may be predicted through a convolution of the upgoing pressure wavefield and the vertical component of the downgoing particle velocity wavefield. In some embodiments, one or more wavefields at their respective depths are convolved. For example, the upgoing pressure wavefield - generated by an impulsive source (e.g., seismic source 104 of FIG. 1) at a source $x_3^S$ depth and measured at a receiver depth $x_3^R$ — may be convolved with the vertical component of the downgoing particle velocity wavefield generated by the same impulsive source and measured at the source depth $x_3^S$. In some embodiments, for the purpose of performing this convolution, the downgoing particle velocity wavefield is propagated backwards from a recording depth (e.g., the receiver depth $x_3^R$)) to the source depth $x_3^S$. For details about the back propagation of upgoing and/or downgoing wavefields, *see, e.g.,* J. T. Fokkema and van den Berg, Seismic Applications of Acoustic Reciprocity (ELSEVIER 1993) (hereinafter "Fokkema and van den Berg (1993)") , at Chapter 10.

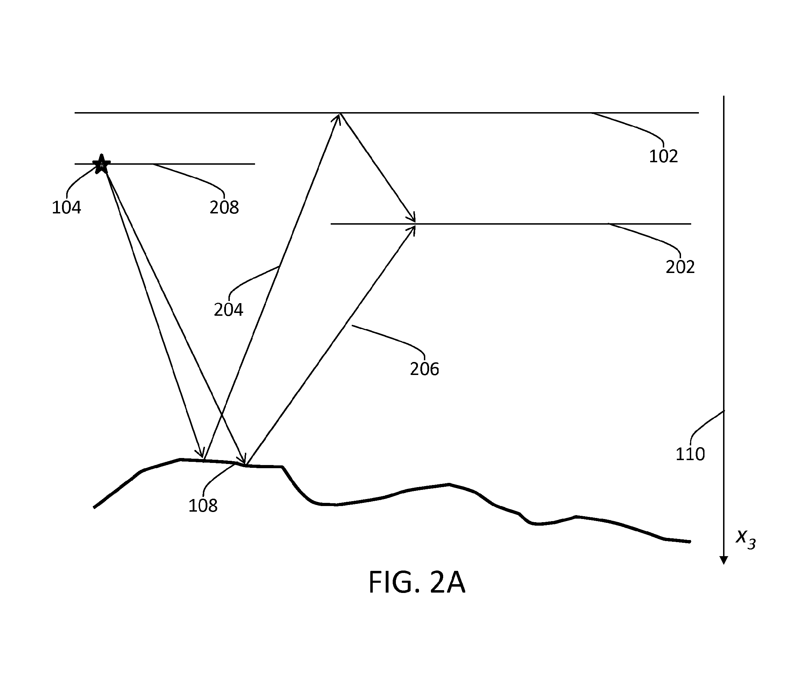

FIG. 2A through FIG. 2E depict an example convolution process involving wavefields at specific source and receiver depths. FIG. 2A depicts an example primary ray-path constituent (206) and an example primary ray-path constituent (204) generated by an impulsive source (e.g., 104 of FIG. 1) at a source depth (208 or $x_3^S$) and received at a receiver depth (202 or $x_3^R$). . As depicted, the primary ray-path constituent (206) is present in upgoing wavefields, while the primary ray-path constituent (204) is present in downgoing wavefields.

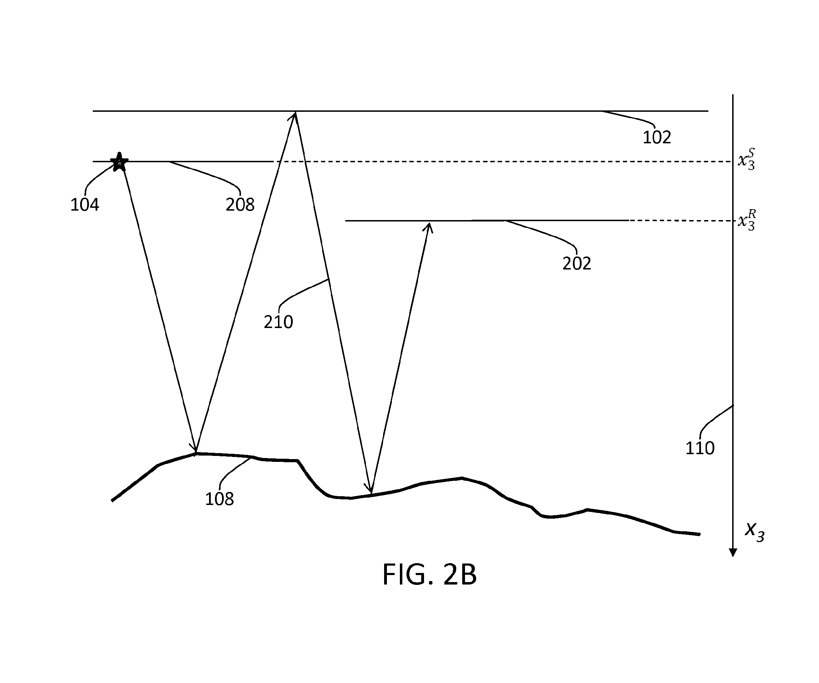

FIG. 2B depicts an example multiple ray-path constituent (210) to be predicted. As used herein, the term "multiple" or "surface-related multiple" refers to scattered wavefield component(s) - such as represented with a ray-path constituent - comprising both (1) reflection(s) from the sea floor and/or subterranean layers below the sea floor and (2) reflection(s) from the sea surface. For the purpose of depiction only, the multiple ray-path constituent (210) is shown as present in the upgoing wavefields. However, other to-be-predicted multiple ray-path constituents, whether present in the upgoing wavefields or downgoing wavefields, may be similarly drawn.

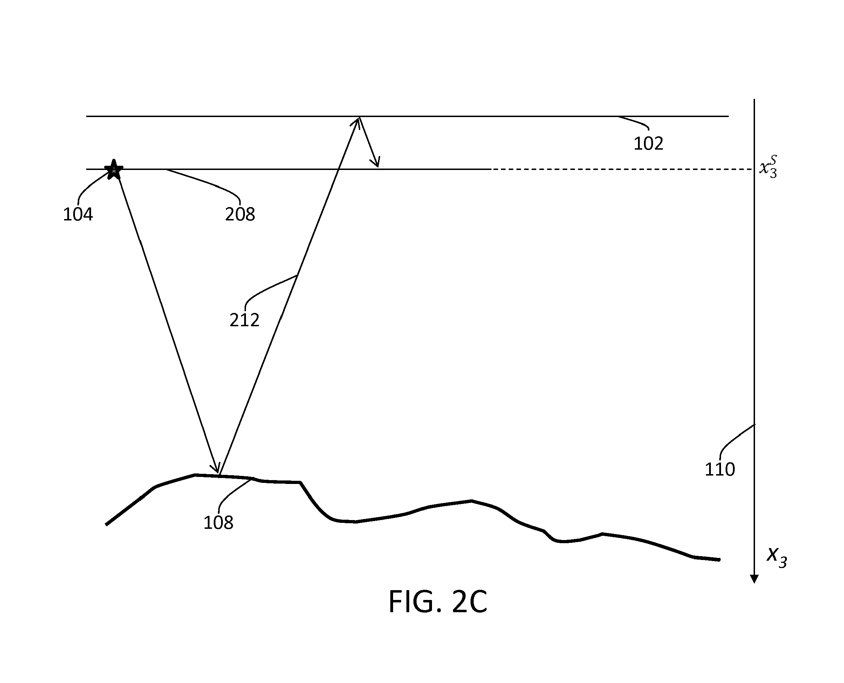

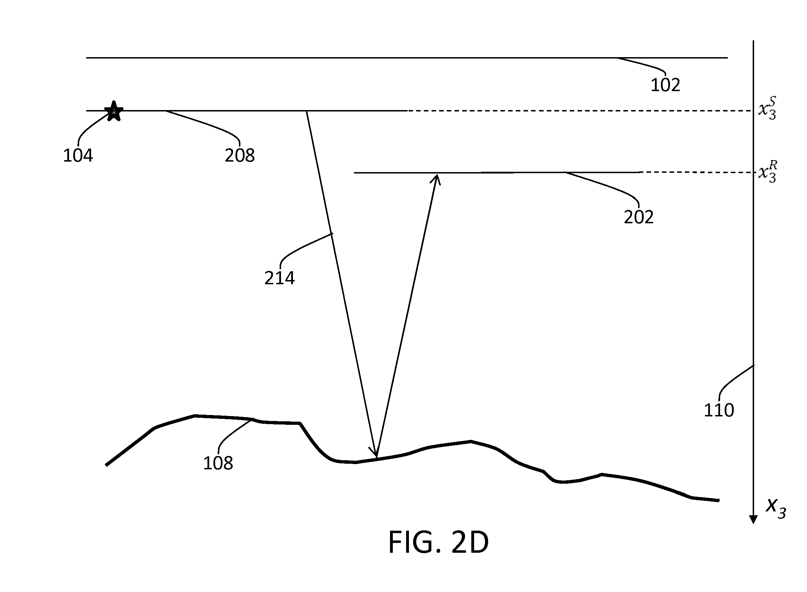

FIG. 2C and FIG. 2D depict example ray-path constituents (212 and 214) obtained at least in part through wavefield decomposition. As depicted, the example ray-path constituent (212) is present in the downgoing wavefields, while the example ray-path constituent (214) is present in the upgoing wavefields.

In some embodiments, the example ray-path constituent (212) for one or more of the downgoing wavefields may be obtained by back propagating the downgoing wavefields from the receiver depth (202 or $x_3^R$) to the source depth (208 or $x_3^S$) as if it would have been received at the source depth (208 or $x_3^S$).

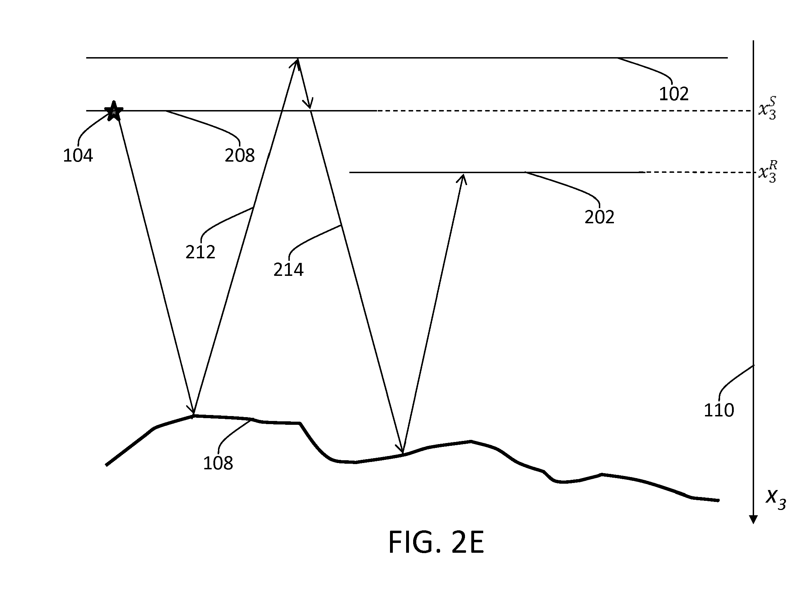

FIG. 2E depicts example convolution using ray-path constituents (212 and 214) obtained at least in part through wavefield decomposition. As shown in FIG. 2E, the to-be-predicted multiple ray-path constituent (210) of FIG. 2B may be obtained by convolving ray-path constituents originating and terminating at specific depths. For example, downgoing ray-path constituents originating at the source depth (208; $x_3^S$) and terminating at the source depth (208; $x_3^S$) such as the example ray-path constituent (212 of FIG. 2C) may be convolved with upgoing ray-path constituents originating at the source depth (208; $x_3^S$) and terminating at the receiver depth (202; $x_3^R$) such as the example ray-path constituent (214 of FIG. 2D). Additionally, optionally, or alternatively, other to-be-predicted multiple ray-path constituents, whether present in the upgoing wavefields or downgoing wavefields, may be similarly predicted by convolving ray-path constituents originating and terminating at specific depths.

In some embodiments, the predicted multiple in FIG. 2E may then readily be subtracted from a computed upgoing wavefield at a receiver depth (e.g., 202 or $x_3^R$).

## 4. CONVOLVING WITH MEASUREMENTS TAKEN AT VARYING DEPTHS

In some embodiments, depth-varying streamers may be used to deploy receivers as described herein. The receivers may be located at a plurality of different depths. Because the receiver depths (or $x_3$-values) vary with $x_1$ and $x_2$ coordinates (perpendicular to the $x_3$-axis of FIG. 1) of the receivers, the acquisition surface is no longer a horizontal plane. Consequently, the convolution process as depicted in FIG. 2A through FIG. 2E may no longer be made in a straightforward fashion, as the receiver (or seismic data recording) depths now are spatially dependent (e.g., vary with $x_1$ and $x_2$ coordinates of the receivers). Example depth-varying streamers may include but are not limited to slant towed streamers, so long as the depth $x_3$ is a single valued function of the position $(x_1, x_2)$.

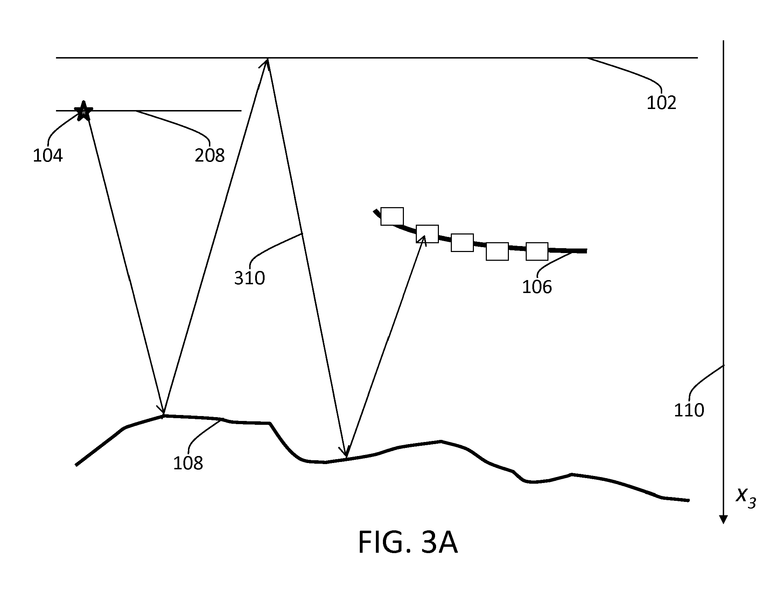

FIG. 3A through FIG. 3D depict an example convolution process involving wavefields whose measurements are performed by a plurality of receivers located in a plurality of different depths. For the purpose of depictions, wavefields may still be generated by an impulsive source at the source depth (208 or $x_3^S$), the same as depicted in FIG. 2A through FIG. 2E. In embodiments in which the plurality of receivers comprise both velocity and pressure sensors, a level of an arbitrary constant depth (or $x_3$-value) (302 or $x_3^{R'}$) may be initially selected. The downgoing component of the vertical particle velocity field may be computed at the source depth (208 or $x_3^S$). The upgoing pressure wavefield may be computed at the selected constant depth (302 or $x_3^{R'}$). Operations involving wave decomposition and extrapolation may be performed as a part of computing the downgoing component of the vertical particle velocity field and the upgoing pressure wavefield at the specific depths. Using the two extrapolated wavefields, surface-related multiples in the upgoing pressure wavefield may be predicted at the selected constant depth (302 or $x_3^{R'}$), as depicted in FIG. 3A through FIG. 3D. The predicted multiples may then be subtracted from the computed upgoing pressure wavefield at the selected constant depth (302 or $x_3^{R'}$). In the figures, all of the ray-path constituents are depicted as reflecting off the top of the sea floor 108 with no penetration. It should be noted that this is for the purpose of explanation. In some embodiments, other wavefield contributions such as ray-path constituents reflecting off from sub-layers beneath the sea floor may be include in wavefield computation. For example, a portion of ray-path constituents in wavefield computation may reflect off features beneath sea floor 108. As such, some or all of the techniques as described herein may be used to predict all free surface-related multiples present in the data.

FIG. 3A depicts an example to-be-predicted upgoing multiple ray-path constituent (310). As depicted, an example streamer 106 with a number of receivers (as indicated by hollow rectangles) located in different depths depending on their longitudinal positions on the streamer 106. Generally speaking, a receiver's depth (or $x_3$-value) may depend on both its longitudinal position and a streamer's position, when multiple streamers are used to deploy receivers.

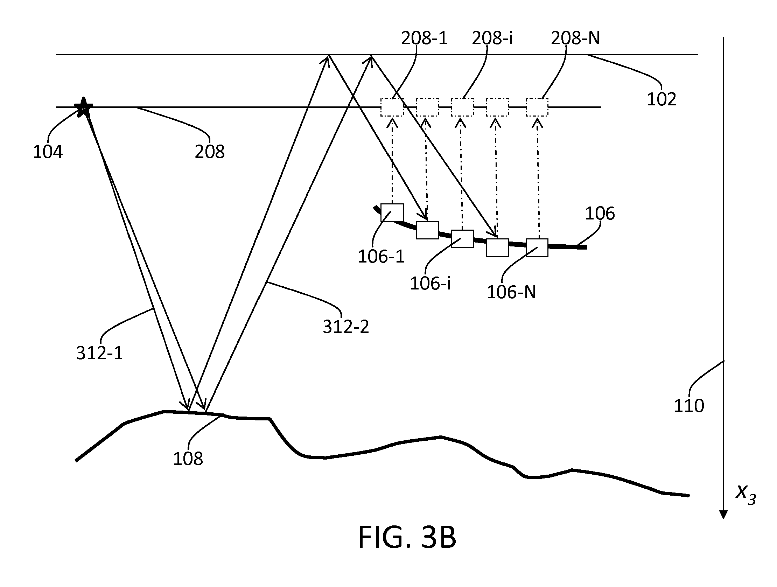

FIG. 3B depicts example downgoing ray-path constituents (312-1 and 312-2) terminating at different longitudinal locations of receivers (106-1, ..., 106-i, ..., 106-N) in streamers (e.g., 106). In some embodiments, the downgoing ray-path constituents (312-1 and 312-2) terminating at the receivers may be obtained through wavefield decomposition based at least in part on the wavefield data (e.g., measurements or recordings of one or more of pressure wavefield, velocity wavefield, etc., pertaining to the same acoustic wavefield generated by the impulsive source) collected by the receivers. The downgoing ray-path constituents (312-1 and 312-2) terminating at the receivers may be extrapolated to corresponding locations (208-1, ..., 208-i, ..., 208-N) at the source depth (208 or $x_3^S$). As depicted, while the downgoing ray-path constituents (312-1 and 312-2) terminate at different depths of the receivers, they are both extrapolated to the same depth (208 or $x_3^S$).

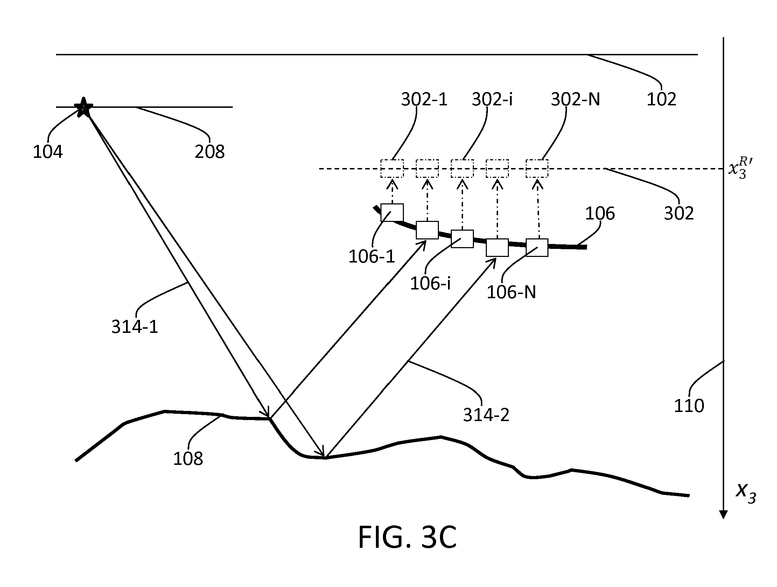

FIG. 3C depicts example upgoing ray-path constituents (314-1 and 314-2) terminating at the different longitudinal locations of receivers (106-1, ..., 106-i, ..., 106-N) in streamers (e.g., 106). In some embodiments, the upgoing ray-path constituents (314-1 and 314-2) terminating at the receivers may be obtained through wavefield decomposition based at least in part on the wavefield data (e.g., measurements or recordings of one or more of pressure wavefield, velocity wavefield, etc., pertaining to the same acoustic wavefield generated by the impulsive source) collected by the receivers. The upgoing ray-path constituents (314-1 and 314-2) terminating at the receivers may be extrapolated to corresponding locations (302-1, ..., 302-i, ..., 302-N) at the selected constant depth (302 or $x_3^{R'}$). As depicted, while the upgoing ray-path constituents (314-1 and 314-2) terminate at different depths of the receivers, they are both extrapolated to the same depth (302 or $x_3^{R'}$).

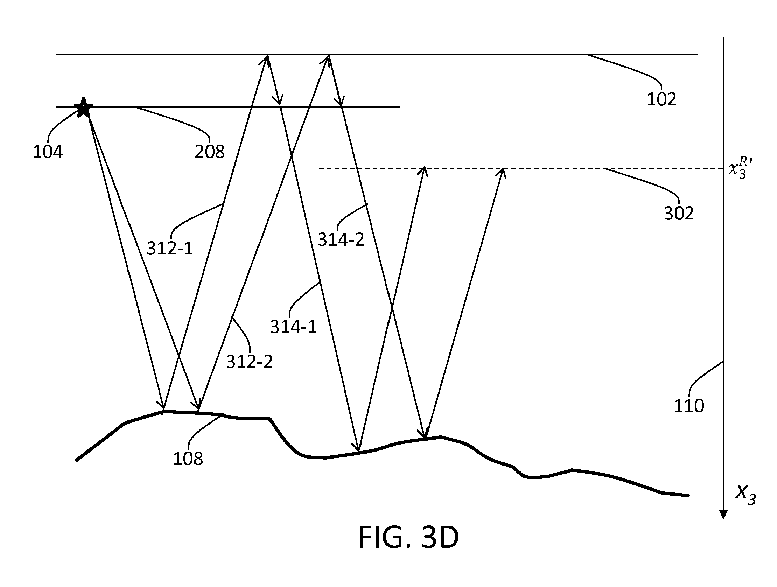

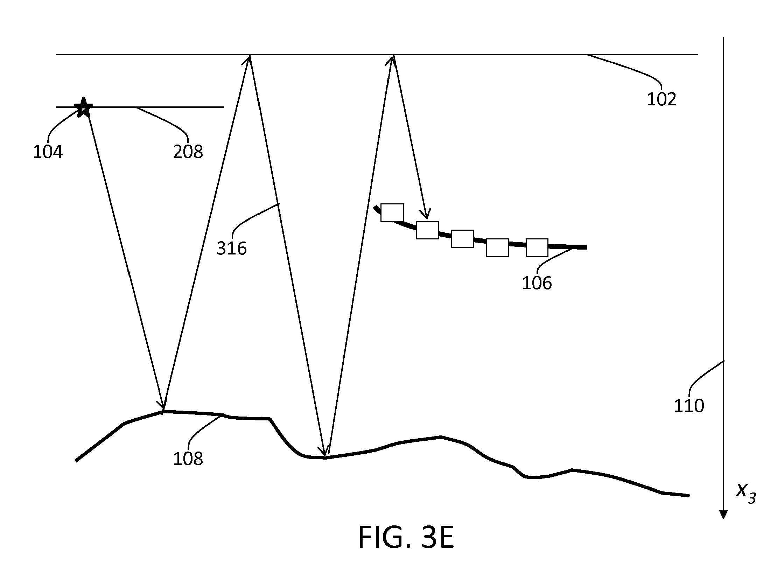

FIG. 3D depicts example convolution using ray-path constituents (312 and 314) obtained at least in part through wavefield decomposition and extrapolation. As shown in FIG. 3E, the to-be-predicted multiple ray-path constituent (310) of FIG. 3A may be obtained by convolving ray-path constituents originating and terminating at the source depth (208 or $x_3^S$) and the selected constant depth (302 or $x_3^{R'}$). For example, downgoing ray-path constituents originating at the source depth (208; $x_3^S$) and terminating at the source depth (208; $x_3^S$) such as the example ray-path constituents (312-1 and 312-2 of FIG. 3B) may be convolved with upgoing ray-path constituents originating at the source depth (208; $x_3^S$) and terminating at the selected constant depth (302; $x_3^{R'}$) such as the example ray-path constituents (314-1 and 314-2 of FIG. 3C). Additionally, optionally, or alternatively, other to-be-predicted multiple ray-path constituents, whether present in the upgoing wavefields or downgoing wavefields, may be similarly predicted by convolving ray-path constituents originating and terminating at specific depths.

As previously discussed, in some embodiments, surface-related wavefield multiples may be predicted through a convolution of the upgoing pressure wavefield and the vertical component of the downgoing particle velocity wavefield. In some embodiments, before performing this convolution, the downgoing particle velocity wavefield is propagated backwards from the receiver depth $x_3^R$ to the source depth $x_3^S$.

## 5. EXAMPLE WAVEFIELD COMPUTATION

Consider a wavefield $p(x, t)$, where the forward Laplace transformation from the space-time domain $(x,t)$ to the Laplace domain $(x,s)$ is defined in general as:

$$\hat{p}(x,s) = \int_{t \in T} \exp(-st)\, p(x,t)\, dt \tag{1}$$

and the corresponding backward Laplace transformation is defined as:

$$\chi_T(t)\, p(x,t) = \frac{1}{2\pi j} \int_{s-j\infty}^{s+j\infty} \exp(st)\, \hat{p}(x,s)\, ds \tag{2}$$

with $\chi_T(t) = \{1, \frac{1}{2}, 0\}$ for $t \in \{T, \partial T, T'\}$; $T = \{t \in \Re\ ;\ t > t_0\}$; $\partial T = \{t \in \Re\ ;\ t = t_0\}$; $T' = \{t \in \Re\ ;\ t < t_0\}$. Here, $t$ is time, $x$ is space, is the imaginary unit, and $s$ is a Laplace frequency parameter.

In the Laplace transformation given above in equations (1) and (2), the Laplace parameter $s$, the frequency parameter, is chosen as a complex variable with both real and imaginary parts. Thus, the Laplace frequency parameter $s$ is now given by:

$$s = j\omega + \varepsilon = j2\pi f + \varepsilon \tag{3}$$

where $\varepsilon$ is an additional real part of the complex Laplace frequency parameter $s$. In the following, the term "complex" will be used to designate that the Laplace frequency parameter has both real and imaginary parts, as in equation (3). This complex Laplace frequency parameter $s$ will be used in the Laplace and spectral domain transforms and related equations.

In some embodiments, the real part $\varepsilon$ of the complex Laplace frequency parameter $s$ may be a constant. In other embodiments, the real part $\varepsilon$ may vary as a function of a combination of such parameters as time, spatial location, or frequency. Thus, the real part $\varepsilon$ may be expressed as, without limitation, one or more of the following equations:

$$\begin{aligned}
\varepsilon &= \text{constant}; \\
\varepsilon &= \varepsilon(\mathbf{x}), \quad where\ \mathbf{x} = (x_1, x_2, x_3); \\
\varepsilon &= \varepsilon(t); \quad \varepsilon = \varepsilon(\mathbf{x}, t); \\
\varepsilon &= \varepsilon(f); \quad \varepsilon = \varepsilon(\mathbf{x}, f).
\end{aligned} \tag{4}$$

where $x_1$ and $x_2$ are horizontal spatial coordinates, such as in-line and cross-line directions, respectively, and $x_3$ is a vertical spatial coordinate, such as depth.

Seismic data may be recorded with a marine streamer. The receiver data for each shot (seismic source activation) position, and for all recorded times $t$, may be taken as input seismic data. The spatial position of the receivers in the Cartesian coordinate frame may be given $\mathbf{x}^R = \left( x_1^R, x_2^R, x_3^R \right)$, by The receiver depth $x_3^R = x_3^R \left( x_1^R, x_2^R \right)$ is a single-valued function of the horizontal coordinates $x_1^R$ and $x_2^R$. Thus, the streamers may not be vertical, but need not necessarily be horizontal. A marine acquisition system as described herein may record this receiver position information. The positions of the receivers are not intended to be a restriction on the scope of the present invention.

The recorded seismic data for a shot may be temporally transformed from the space-time domain to the Laplace space-frequency domain. In an embodiment, the scattered wavefield $p^{sct}$ at the discrete locations is transformed from the space-time $\left( x_1^R, x_2^R, x_3^R, t \right)$ domain to the Laplace space-frequency $\left( x_1^R, x_2^R, x_3^R, s \right)$ domain by the forward Laplace transformation given in Equation (1), and may be expressed as follows:

$$\hat{p}^{sct} = \hat{p}^{sct}\left( x_{1,q}^R, x_{2,r}^R, x_{3,q,r}^R, s \right) \tag{5}$$

with using a complex Laplace frequency parameter $s$ as given by equation (3). Here, $\hat{p}^{sct}$ is the scattered acoustic wavefield in the space-frequency domain, $x_{1,q}^R$ is an in-line receiver coordinate, $q$ is an in-line receiver number, $x_{2,r}^R$ is a cross-line receiver coordinate, $r$ is a cross-line receiver number, and $x_{3,q,r}^R$ is receiver depth as a function of $x_{1,q}^R$ and $x_{2,r}^R$. The real part $\varepsilon$ of the complex Laplace frequency parameter $s$ may be given by one of equations (4). This transform of the scattered wavefield $p^{sct}$ at the receiver locations may be performed for each shot position. As such, the transformed seismic data are obtained for a frequency $f$.

The transformed seismic data given by equation (5) for a frequency may be transformed from the Laplace space-frequency domain to a spectral domain. This two-dimensional spectral transformation may be denoted with an operator $F$. In an embodiment, the scattered wavefield $\hat{p}^{sct}$ is transformed from the Laplace space-frequency domain $\left( x_1^R, x_2^R, x_3^R, s \right)$ to the spectral domain $\left( s\alpha_n, s\beta_m, x_3^R, s \right)$ as follows:

$$\tilde{p}^{sct} = F\{\hat{p}^{sct}\} = \int_{(x_1,x_2)\in \Re^2} \exp(js\alpha x_1 + js\beta x_2)\, \hat{p}^{sct}(x_1, x_2, x_3, s)\, \mathrm{d}A \tag{6}$$

or, after discretization of the spatial coordinates with $\Delta x_1$ as in-line sampling distance, and $\Delta x_2$ as cross-line sampling distance, as follows:

$$\tilde{p}_{n,m}^{sct} = \Delta x_1^R \, \Delta x_2^R \sum_{q=-\frac{1}{2}N+1}^{\frac{1}{2}N} \sum_{r=-\frac{1}{2}M+1}^{\frac{1}{2}M} \exp\left( js\alpha_n x_{1,q}^R + js\alpha\beta_m x_{2,r}^R \right) \hat{p}^{sct} \tag{7}$$

In equation (6), the right-hand-side is an integration of infinitesimal portions dA over a surface spanned up by $x_1$ and $x_2$. In equation (7), the following quantities are used:

$$s\alpha_n = n\Delta\left( s\alpha \right), \qquad s\beta_m = m\Delta\left( s\beta \right), \tag{8}$$

$$\Delta\left(s\alpha\right)=\frac{2\pi}{N\Delta x_1^R}\ ,\qquad \Delta\left(s\beta\right)=\frac{2\pi}{M\Delta x_2^R}\ .$$

$$(9)$$

The inverse two-dimensional spectral transfromation is denoted by operator $F^{-1}$, and given as follows:

$$\hat{p}^{sct}=F^{-1}\{\tilde{p}^{sct}\}=\frac{1}{(2\pi)^2}\int_{(s\alpha,s\beta)\in\Re^2}\exp(-js\alpha x_1-js\beta x_2)\ \tilde{p}^{sct}(js\alpha_1,js\beta,x_3,s)\ \mathrm{d}A$$

$$(10)$$

or, after discretization:

$$\hat{p}_{q,r}^{sct}=(\Delta s\alpha)\,(\Delta s\beta)\sum_{n=-\frac{1}{2}N+1}^{\frac{1}{2}N}\sum_{m=-\frac{1}{2}M+1}^{\frac{1}{2}M}\exp\left(js\alpha_n x_{1,q}^R+\ js\alpha\beta_m x_{2,r}^R\right)\tilde{p}^{sct}$$

$$(11)$$

Here, $\tilde{p}_{n,m}^{sct}$ is the scattered acoustic wavefield in the spectral domain, $n$ is an in-line spectral number, $m$ is a cross-line spectral number, $\Delta x_1^R$ is in-line receiver sampling distance, $\Delta x_2^R$ is cross-line receiver sampling distance, $js\alpha_n$ is an in-line spectral Fourier parameter, $\Delta(s\alpha)$ is in-line spectral sampling distance, $js\beta_m$ is a cross-line spectral Fourier parameter, $\Delta(s\beta)$ is cross-line spectral sampling distance, $N$ is total number of in-line receivers, and $M$ is total number of cross-line receivers. The complex Laplace frequency parameter $s$ may also be used in this transform to the spectral domain.

To compute the continuous representation of the upgoing constituent of the pressure wavefield at an arbitrary constant depth level $x_3^R$, the following equation, which expresses this field as a function of measurements of pressure and the normal component of the particle velocity fields at an arbitrary (e.g., depth varying) interface, may be used (Fokkema and van den Berg, 1993):

$$\overline{\mathrm{P}}^{up}(js\alpha,js\beta,s)=\frac{1}{2s\Gamma}\int_{x\in\partial D_1}[\hat{v}_k(\mathbf{x},s)\,s\rho\exp(js\alpha x_1+\ js\beta x_2-s\Gamma x_3)$$

$$+\hat{p}(\mathbf{x},s)\partial_k\exp\left(s\alpha x_1+\ js\beta x_2+s\Gamma x_3\right)]v_k\mathrm{d}A$$

$$(12)$$

with

$$\tilde{p}^{up}(js\alpha,js\beta,x_3^R,s)=\ \overline{\mathrm{P}}^{up}(js\alpha,js\beta,s)\exp(-s\Gamma x_3^R)$$

$$(13)$$

and the vertical propagation coefficient $s\Gamma$ is:

$$s\Gamma = j\sqrt{\left(\frac{2\pi f}{c}\right)^2 - (s\alpha)^2 - (s\beta)^2} \qquad (14)$$

where $c$ is acoustic wave speed in water, $\hat{v}_k$ is the normal component particle velocity to the recording streamer, and $\partial D_1$ is an arbitrary interface for which $x_3^R < x_{3,min}^R$ and $x_{3,min}^R$ denotes the minimum value of $x_3$ on the interface.

To compute a similar equation for the downgoing vertical constituent of particle velocity at an arbitrary constant depth level, the downgoing pressure wavefield may be computed by extrapolating the upgoing wavefield up to depth level $x_3 = 0$, noting that at this depth level:

$$\hat{p}(js\alpha, js\beta, 0, s) = \hat{p}^{down}(js\alpha, js\beta, 0, s) + \hat{p}^{up}(js\alpha, js\beta, 0, s) = 0$$

$$(15)$$

After forward extrapolating the downgoing pressure wavefield to depth level $x_3 = x_3^R$, the downgoing vertical constituent of particle velocity may be computed with a flat sea surface assumption, as follows:

$$\rho\, \tilde{v}_3^{down}(js\alpha, js\beta, x_3^R, s) - \Gamma\, \tilde{p}^{down}(js\alpha, js\beta, x_3^R, s) = 0$$

$$(16)$$

Once the upgoing pressure wavefield $\hat{p}^{up}\left(x_1, x_1, x_3^{R'} \mid x_1, x_1, x_3^S, s\right)$ and the downgoing component of the particle velocity $\tilde{v}_3^{down}\left(x_1, x_1, x_3^S \mid x_1, x_1, x_3^S, s\right)$ are computed, the corresponding upgoing surface-related multiples may be computed as follows:

$$\tilde{M}\left(x_1^{R'}, x_2^{R'}, x_3^{R'} \mid x_1^S, x_2^S, x_3^S, s\right) =$$

$$\int_{(x_1, x_2)\in\mathcal{R}^2} \tilde{P}^{up}\left(x_1^{R'}, x_2^{R'}, x_3^{R'} \mid x_1', x_2', x_3^S, s\right) v_3^{down}\left(x_1', x_2', x_3^S \mid x_1^S, x_2^S, x_3^S, s\right)\, dA$$

$$(17)$$

6. DETERMINING TOTAL SCATTERED MULTIPLES AT VARYING DEPTHS

In the discussions so far, surface-related multiples are predicted for the upgoing pressure wavefield at a constant depth of choice $x_3^{R'}$. Additionally, to perform surface-related multiple elimination (SRME) processing, surface-related multiples for the total scattered pressure wavefield, containing both the upgoing and downgoing ray-path constituents, may be predicted. To derive the total scattered pressure wavefield, in addition to predicting upgoing multiple ray-path constituents such as 310 of FIG. 3A, downgoing ray-path constituents such as 316 of FIG. 3E are also predicted. Thus, in some embodiments, multiples comprising both upgoing and downgoing ray-path constituents are predicted at the original variable receiver depths.

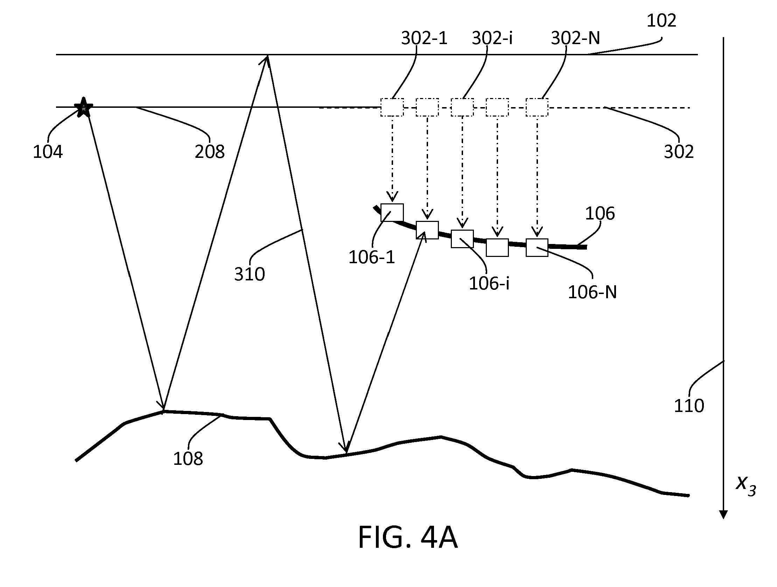

FIG. 4A depicts an example operation of deriving upgoing ray-path constituents (e.g., 310) of the multiples.

Since the constant depth (302 or $x_3^{R\prime}$) is arbitrary, in some embodiments, the constant depth (302 or $x_3^{R\prime}$) may be set the same as the source depth (208 or $x_3^{S}$). The same convolution operation depicted in FIG. 3D with reference to FIG. 3B and FIG. 3C may be performed with this choice of the selected constant depth (302 or $x_3^{R\prime}$) to yield the upgoing pressure wavefield at the source depth (208 or $x_3^{S}$). Subsequently, the upgoing pressure field at the receivers' locations (106-1, ..., 106-i, ..., 106-N) on the acquisition surface may be obtained by extrapolating the upgoing pressure field from the source depth (208 or $x_3^{S}$) back to the receivers' locations (106-1, ..., 106-i, ..., 106-N) or the original variable streamer depths. The extrapolation (e.g., back propagation) may be accomplished as follows:

$$\bar{P}^{up}\left(x_1^R, x_2^R, x_3^R(x_1^R, x_2^R)\,\middle|\, x^S, s\right) \;=\; F^{-1}\{\tilde{p}^{up}\left(s\alpha, js\beta, x_3^{R\prime}\,\middle|\, x_1^S, x_2^S, x_3^S, s\right)$$

$$\cdot \exp\left(+s\Gamma\left(x_3^R(x_1^R, x_2^R) - x_3^{R\prime}\right) F\{\hat{P}^{up}\left(x_1^R, x_2^R, x_3^{R\prime}\,\middle|\, x^S, s\right)\}\}$$

$$(18)$$

where $\{F, F^{-1}\}$ are the forward and backward transformation to the spectral domain, as defined by equations 6 and 10. Note that upgoing multiple pressure field will be backward propagated over a distance $\left(x_3^R(x_1^R, x_2^R) - x_3^{R\prime}\right)$, where $x_3^{R\prime}$ is chosen such that $x_3^R(x_1^R, x_2^R) > x_3^{R\prime}$.

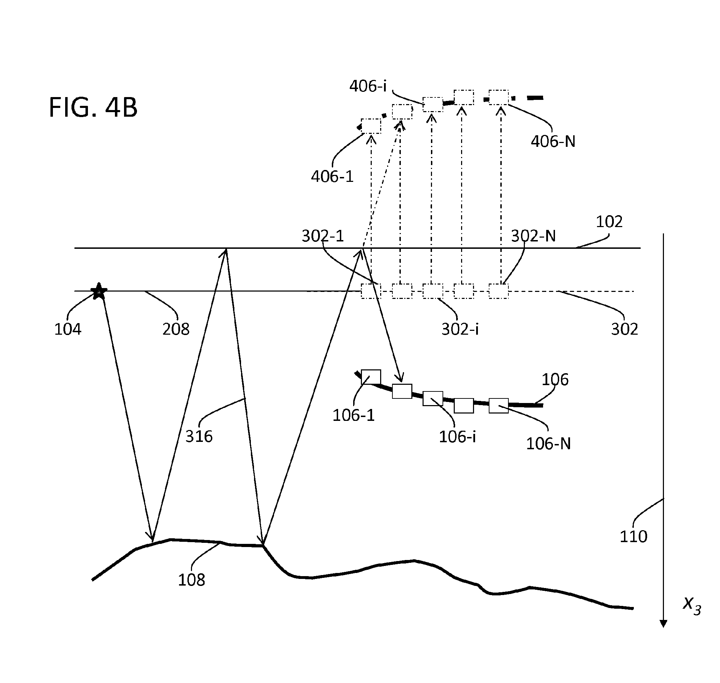

FIG. 4B depicts an example operation of deriving downgoing ray-path constituents (316) of the multiples. Again, since the constant depth (302 or $x_3^{R\prime}$) is arbitrary, in some embodiments, the constant depth (302 or $x_3^{R\prime}$) may be set the same as the source depth (208 or $x_3^{S}$). The same convolution operation depicted in FIG. 3D with reference to FIG. 3B and FIG. 3C may be performed with this choice of the selected constant depth (302 or $x_3^{R\prime}$) to yield the upgoing pressure wavefield at the source depth (208 or $x_3^{S}$). Subsequently, a flat sea surface assumption may be applied such that the sea surface is approximated by the reference plane 102 of FIG. 1. With this assumption, the downgoing pressure field at the receivers' locations (106-1, ..., 106-i, ..., 106-N) on the acquisition surface may be considered as equivalent to the upgoing pressure field at mirrored positions (406-1, ..., 406-i, ..., 406-N) of the receivers' locations (106-1, ..., 106-i, ..., 106-N). Subsequently, the downgoing pressure field at the receivers' locations (106-1, ..., 106-i, ..., 106-N) or the original variable streamer depths on the acquisition surface may be obtained by extrapolating the upgoing pressure field from the source depth (208 or $x_3^{S}$) to the mirrored positions (406-1, ..., 406-i, ..., 406-N). The extrapolation (e.g., forward propagation) may be accomplished as follows:

$$\bar{P}^{down}\left(x_1^R, x_2^R, x_3^R(x_1^R, x_2^R)\,\middle|\, x^S, s\right) \;=\; -F^{-1}\{\tilde{p}^{up}\left(s\alpha, js\beta, x_3^{R\prime}\,\middle|\, x_1^S, x_2^S, x_3^S, s\right)$$

$$\cdot \exp\left(-s\Gamma\left(x_3^R(x_1^R, x_2^R) + x_3^{R\prime}\right) F\{\bar{P}^{up}\left(x_1^R, x_2^R, x_3^{R\prime}\,\middle|\, x^S, s\right)\}\}$$

$$(19)$$

where the up-going multiple pressure field is forward propagated over a positive distance $\left(x_3^R(x_1^R, x_2^R) + x_3^{R\prime}\right)$, where the minus sign recognizes the reflection coefficient of -1 at the free surface.

Upgoing multiple ray-path constituents (e.g., 310 of FIG. 4A) and downgoing multiple ray-path constituents (e.g., 316 of FIG. 4A) obtained through the extrapolation operations depicted in FIG. 4A and FIG. 4B may be summed up to obtain surface-related multiple contributions in the total scattered pressure wavefield. These surface-related multiple contributions may then be readily subtracted from the measured scattered pressure wavefield at the receivers' locations (106-1, ..., 106-i, ..., 106-N) or the original variable streamer depths on the acquisition surface.

## 7. DETERMINING MULTIPLES WITH PRESSURE MEASUREMENTS ONLY

In some embodiments, surface-related multiples may be predicted with wavefield data that comprises scattered pressure wavefield measurements only. For example, in some embodiments, receivers do not comprise velocity sensors. Instead of convolving ray-path constituents of two different wavefield types (e.g., ray-path constitutes in the upgoing or downgoing pressure wavefield convolved with ray-path constituents in the upgoing or downgoing component of the vertical velocity wavefield), surface-related prediction may be performed with one or more operations involving wavefield decomposition and extrapolation of upgoing and/or downgoing pressure wavefield; these operations to derive the surface-related prediction may be performed without using previously discussed ray-path constituents in the velocity wavefield.

In some embodiments, wavefield decomposition operations may encounter singularities for certain (approximately known) frequency-wavenumber combinations. This problem may be circumvented using regularization constraints incorporated in an inversion-based wavefield decomposition approach, as described in Riyanti et al., "Method for full-bandwidth deghosting of marine seismic streamer data," (U.S. Patent Application No. 20110110189), the entire contents of which are hereby incorporated by reference for all purposes as if fully set forth herein, to compute the upgoing pressure wavefield at arbitrary and constant depth $x_3^{R\prime}$.

In an embodiment, once the upgoing pressure wavefield $\hat{p}^{up}\left(x_1, x_1, x_3^{R\prime} \mid x^S, s\right)$ has been computed at a constant arbitrary receiver depth, ray-path constituents in the downgoing component of the particle velocity wavefield are computed based on the upgoing pressure wavefield using a flat sea surface assumption with equations (15) and (16) as previously mentioned.

With the ray-path constituents computed based on the pressure measurements, the convolution process as depicted in FIG. 3A through FIG. 3E may be applied to derive the same upgoing surface-related multiples at a selected constant depth (e.g., 302 or $x_3^{R\prime}$).

Similarly, surface-related multiples in the total scattered pressure wavefield at receivers' locations (106-1, ..., 106-i, ..., 106-N) or variable streamer depths may also be predicted with the techniques as depicted in FIG. 4A and FIG. 4B. For example, receivers (the real receivers and the mirrored receivers) on both sides of the free-surface may be considered. The predicted upgoing surface-related multiples may be extrapolated from the source depth (208 or $x_3^S$) back to the receivers' locations (106-1, ..., 106-i, ..., 106-N) or variable streamer depths and to mirror locations (406-1, ..., 406-i, ..., 406-N), as depicted in FIG. 4A and FIG. 4B. After summation, the predicted multiples for the total scattered wavefield may be subtracted from the measured pressure wavefield recorded at the receivers' locations (106-1, ..., 106-i, ..., 106-N) or variable streamer depths.

In some embodiments, errors made in the computation of the upgoing wavefield from using the single sensor data only (e.g., pressure measurements only, velocity measurements only, etc.) do not have a large impact on the end results for at least the following reasons. First, errors made may destructively cancel one another after the convolutions over many different traces carried out to predict the multiples (e.g., using equation (17)). Second, errors made may still be accounted for using adaptive subtraction of surface-related multiples from the raw, measured total scattered wavefield.

In some embodiments, techniques as described herein, including but not limited only to, wavefield decomposition, extrapolation, convolution, etc., may be used to determine/predict surface-related multiples, taking into account source ghosts as a result of the reflection of the impulsive source in relation to the sea surface. For example, in some embodiments, a source ghost may be considered as an additional source that emits source waves at a mirrored location above the sea surface assuming that the sea surface is flat.

Quantities to be operated or used under techniques as described herein include, without limitation, wavefield data, measurements, derived quantities, operational parameters, etc. A quantity may be represented as scalar, vector, matrix, tensor, etc. as appropriate. Values of a quantity or a quantity field may be represented in various types of domains. For example, temporal values may be represented either in the frequency domain or in the time domain. Similarly, spatial values may be represented either in the wavenumber domain or in the space domain. Different components of a non-scalar quantity may be represented in different types of domain.

Operations performed by techniques as described herein include, without limitation, wavefield decompositions, wavefield extrapolations, convolutions, forward domain transformations, reverse domain transformations, etc. Some of the operations may comprise Fourier transformation, which may be implemented with one or more of fast Fourier transformation (FFT) techniques, digital Fourier transformation (DFT) techniques, inverse FFT techniques, inverse DFT techniques, etc.

## 8. PROCESS FLOW

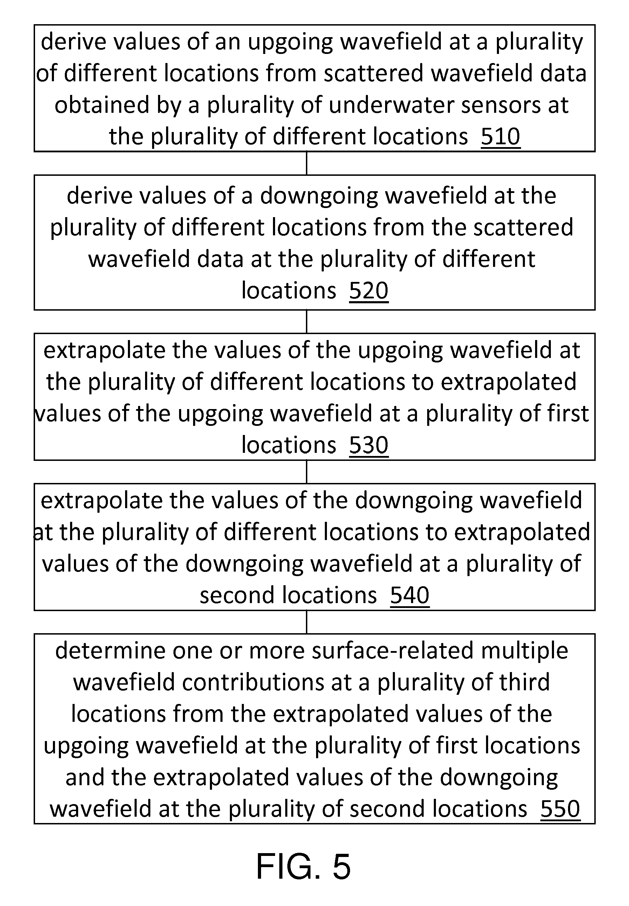

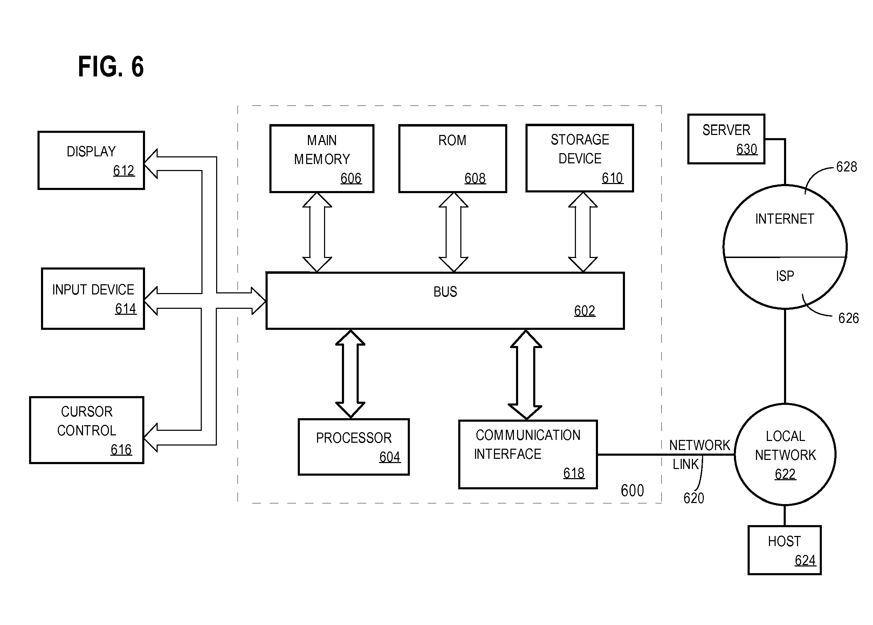

FIG. 5 depicts an example process flow according to an example embodiment. In some example embodiments, one or more computing devices or components may perform this process flow. In block 510, a seismic data analysis system (e.g., 600 as depicted in FIG. 6) derives values of an upgoing wavefield at a plurality of different locations from scattered wavefield data obtained by a plurality of underwater sensors at the plurality of different locations. Here, the plurality of different locations may correspond to a plurality of different underwater depths.

In block 520, the seismic data analysis system derives values of a downgoing wavefield at the plurality of different locations from the scattered wavefield data at the plurality of different locations.

In block 530, the seismic data analysis system extrapolates the values of the upgoing wavefield at the plurality of different locations to extrapolated values of the upgoing wavefield at a plurality of first locations. Here, the plurality of first locations may all correspond to a first underwater depth.

In block 540, the seismic data analysis system extrapolates the values of the downgoing wavefield at the plurality of different locations to extrapolated values of the downgoing wavefield at a plurality of second locations. Here, the plurality of second locations may all correspond to a second underwater depth.

In block 550, the seismic data analysis system determines one or more surface-related multiple wavefield contributions at a plurality of third locations from the extrapolated values of the upgoing wavefield at the plurality of first locations and the extrapolated values of the downgoing wavefield at the plurality of second locations.

## 9. EXAMPLE IMPLEMENTATIONS

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, server computers or any other device that incorporates hard-wired and/or program logic to implement the techniques.

FIG. 6 is a block diagram that depicts an example computer system 600 upon which an embodiment of the invention may be implemented. Computer system 600 includes a bus 602 or other communication mechanism for communicating information, and a hardware processor 604 coupled with bus 602 for processing information. Hardware processor 604 may be, for example, a general purpose microprocessor.

Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Such instructions, when stored in non-transitory storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT) or liquid crystal display (LCD), for displaying information to a computer user. Although bus 602 is depicted as a single bus, bus 602 may comprise one or more buses. For example, bus 602 may include without limitation a system or memory bus by which processor 604 communicates with main memory 606, an input/output bus by which processor 604 communicates with slower devices such as 610-618, and/or any other type of bus for transferring data or signals between components of computer system 600.

An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques herein are performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage device 610. Volatile media includes dynamic memory, such as main memory 606. Common forms of storage media include, for example, a magnetic disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid state drive of a remote computer. The remote computer can load the instructions into its dynamic memory and send the instructions over a network to a local computer 600. The instructions received at the local computer 600 by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be a network interface card, integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

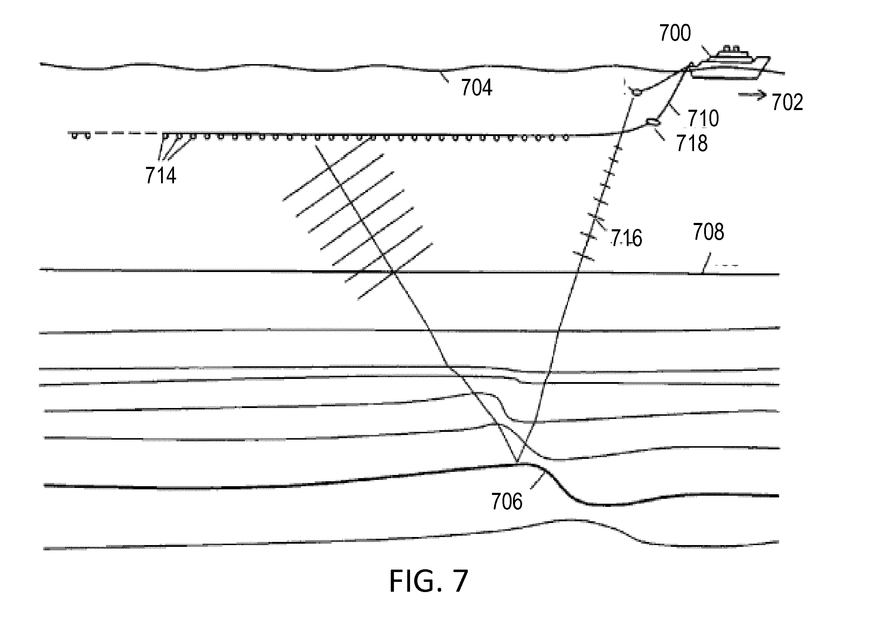

Exploration seismology is routinely performed both on land and at sea. At sea, seismic survey ships deploy streamers behind the ship as depicted in FIG. 7, which is a depiction of a side view of an example marine seismic survey environment in which an embodiment may be implemented. Each streamer 710 trails behind ship 700 as the ship moves forward (in the direction of arrow 702), and each streamer includes multiple spaced-apart receivers 714. Each streamer 710 may further include a programmable diverter 718 and programmable depth controllers that pull the streamer out to an operating offset distance from the ship's path and down to an operating depth.

Streamers 710 may be up to several kilometers long, and are usually constructed in sections 25 to 100 meters in length that include groups of up to 35 or more uniformly spaced receivers. Each streamer 710 includes electrical or fiber-optic cabling for interconnecting receivers 714 and the seismic equipment on ship 700. Data may be digitized near receivers 714 and transmitted to ship 700 through the cabling at rates of 7 (or more) million bits of data per second.

As depicted in FIG. 7, seismic survey ship 700 also tows a source 712. Source 712 may be an impulse source or a vibratory source. Receivers 714 used in marine seismology are commonly referred to as hydrophones, and are usually constructed using a piezoelectric transducer. Various suitable types of hydrophones are available such as disk hydrophones and cylindrical hydrophones. Source 712 and receivers 714 typically deploy below the ocean's surface 704. Processing equipment aboard the ship controls the operation of the source and receivers and records the acquired data.

Seismic surveys provide data for imaging below the ocean surface 704 and include subsurface structures such as structure 706, which lies below the ocean floor 708. Certain seismic characteristics of recorded seismic data are indicative of oil and/or gas reservoirs.

To image the subsurface structure 706, source 712 emits seismic waves 716 that are reflected where there are changes in acoustic impedance contrast due to subsurface structure 706 (and other subsurface structures). The reflected waves are detected by a pattern of receivers 714. By recording the elapsed time for the seismic waves 716 to travel from source 712 to subsurface structure 706 to receivers 714, an image of subsurface structure 706 can be obtained after appropriate data processing. Data processing may include the techniques described above.

## 10. EXTENSIONS AND ALTERNATIVES

In the foregoing specification, embodiments have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

## Claims

1. An apparatus comprising:

   one or more processors;
   one or more storage media storing instructions, which, when processed by the one or more processors, causes:

   deriving values of an upgoing wavefield at a plurality of different locations from scattered wavefield data obtained by a plurality of underwater sensors at the plurality of different locations, the plurality of different locations corresponding to a plurality of different underwater depths;
   deriving values of a downgoing wavefield at the plurality of different locations from the scattered wavefield data at the plurality of different locations;
   extrapolating the values of the upgoing wavefield at the plurality of different locations to extrapolated values of the upgoing wavefield at a plurality of first locations, the plurality of first locations all corresponding to a first underwater depth;
   extrapolating the values of the downgoing wavefield at the plurality of different locations to extrapolated values of the downgoing wavefield at a plurality of second locations, the plurality of second locations all corresponding to a second underwater depth;
   determining one or more surface-related multiple wavefield contributions at a plurality of third locations from the extrapolated values of the upgoing wavefield at the plurality of first locations and the extrapolated values of the downgoing wavefield at the plurality of second locations.

2. The apparatus of Claim 1, wherein the scattered wavefield data at the plurality of different locations comprises one or more of measurements of a pressure wavefield and measurements of a velocity wavefield.

3. The apparatus of Claim 1 or Claim 2, wherein the scattered wavefield data at the plurality of different locations comprises only measurements of one of a pressure wavefield or a velocity wavefield.

4. The apparatus of any of the preceding claims, wherein one of the first underwater depth or the second underwater depth represents an underwater constant depth below a sea surface.

5. The apparatus of any of the preceding claims, wherein the values of the upgoing wavefield at the plurality of different locations represent a first set; wherein the values of the downgoing wavefield at the plurality of different locations represent a second set; and wherein at least one of the first set or the second is obtained from the scattered wavefield data at the plurality of different locations at least in part by wavefield decomposition based on one of (a) pressure wavefield data only or (2) both pressure wavefield data and velocity wavefield data.

6. The apparatus of any of the preceding Claims, wherein the plurality of third locations comprises one or more of (a) locations at one of the first underwater depth or the second underwater depth, or (b) the plurality of different locations.

7. The apparatus of any of the preceding Claims, wherein the one or more surface-related multiple wavefield contributions at a plurality of third locations comprise upgoing surface-related multiple wavefield contributions at the plurality of third locations and downgoing surface-related multiple wavefield contributions at the plurality of third locations.

8.  The apparatus of Claim 7, wherein the downgoing surface-related multiple wavefield contributions are derived by extrapolating upgoing surface-related multiple wavefield contributions to a plurality of fourth locations, and wherein the plurality of fourth locations are mirrored positions of the plurality of third locations in relation to a horizontal reference surface approximating a sea surface.

9.  A method comprising:

deriving values of an upgoing wavefield at a plurality of different locations from scattered wavefield data obtained by a plurality of underwater sensors at the plurality of different locations, the plurality of different locations corresponding to a plurality of different underwater depths;
deriving values of a downgoing wavefield at the plurality of different locations from the scattered wavefield data at the plurality of different locations;
extrapolating the values of the upgoing wavefield at the plurality of different locations to extrapolated values of the upgoing wavefield at a plurality of first locations, the plurality of first locations all corresponding to a first underwater depth;
extrapolating the values of the downgoing wavefield at the plurality of different locations to extrapolated values of the downgoing wavefield at a plurality of second locations, the plurality of second locations all corresponding to a second underwater depth;
determining one or more surface-related multiple wavefield contributions at a plurality of third locations from the extrapolated values of the upgoing wavefield at the plurality of first locations and the extrapolated values of the downgoing wavefield at the plurality of second locations;
wherein the method is performed by one or more computing devices.

10. The method of Claim 9, wherein the scattered wavefield data at the plurality of different locations comprises one or more of measurements of a pressure wavefield and measurements of a velocity wavefield.

11. The method of Claim 9 or Claim 10, wherein the scattered wavefield data at the plurality of different locations comprises only measurements of one of a pressure wavefield or a velocity wavefield.

12. The method of any of Claims 9 to 11, wherein one of the first underwater depth or the second underwater depth represents one of (a) a source depth at which a source generates one or more scattered fields of which the scattered field data is collected from measurements, or (b) an underwater constant depth below a sea surface.

13. The method of any of Claims 9 to 12, wherein the values of the upgoing wavefield at the plurality of different locations represent a first set; wherein the values of the downgoing wavefield at the plurality of different locations represent a second set; and wherein at least one of the first set or the second is obtained from the scattered wavefield data at the plurality of
different locations at least in part by wavefield decomposition based on one of (a) pressure wavefield data only or (2) both pressure wavefield data and velocity wavefield data.

14. The method of any of Claims 9 to 13, wherein the plurality of third locations comprises one or more of (a) locations at one of the first underwater depth or the second underwater depth, or (b) the plurality of different locations.

15. The method of Claim 17, wherein the one or more surface-related multiple wavefield contributions at a plurality of third locations comprise upgoing surface-related multiple wavefield contributions at the plurality of third locations and downgoing surface-related multiple wavefield contributions at the plurality of third locations.

16. A method comprising:

performing, based at least in part on scattered wavefield data obtained by a plurality of underwater sensors at a plurality of different locations, the plurality of different locations corresponding to a plurality of different underwater depths, one or more operations chosen from the group consisting of (a) - (f) as follows:

(a) computing upgoing constituents of a pressure wavefield at a first arbitrary constant depth level as a function of measurements of the pressure wavefield and normal components of a particle velocity field at the plurality of different depths,
(b) extrapolating the upgoing constituents of the pressure wavefield up to a sea level to compute downgoing constituents of the pressure wavefield,

(c) computing downgoing vertical constituents of the particle velocity field based on the downgoing constituents of the pressure wavefield with a flat sea surface assumption at a second arbitrary constant depth level,

(d) computing surface-related multiples using the upgoing constituents of the pressure wavefield and the downgoing vertical constituents of the particle velocity field,

(e) computing the upgoing constituents of the pressure wavefield at the first arbitrary constant depth level as a function of upgoing constituents of the pressure wavefield at a source depth, and

(f) equating the downgoing constituents of the pressure wavefield at the first arbitrary depth as the upgoing constituents of the pressure wavefield at a mirror depth to the first arbitrary depth with the flat sea surface assumption;

determining one or more surface-related multiple wavefield contributions at the plurality of different locations based at least in part on results of the one or more operations performed on the scattered wavefield data obtained at the plurality of different location; and

wherein the method is performed by one or more computing devices.

17. The method of Claim 16, wherein the scattered wavefield data at the plurality of different locations comprises either measurements of both the pressure wavefield and the velocity wavefield; or, only measurements of one of the pressure wavefield or the velocity wavefield.

18. The method of Claim 16 or Claim 17, wherein one of the first arbitrary depth level or the second arbitrary depth level represents an underwater constant depth below a sea surface.

19. The method of any of Claims 16 to 18, wherein the first arbitrary depth level is the same as the second arbitrary depth level.

20. The method of any of Claims 16 to 19, further comprising one or more other surface-related multiple wavefield contributions from a ghost source to a source from which the one or more surface-related multiple wavefield contributions are derived.

21. One or more non-transitory storage media storing instructions which, when executed by one or more computing devices, cause the performance of the method of any of claims 9 to 20.

FIG. 1

FIG. 2A

EP 2 674 788 A2

FIG. 2B

FIG. 2C

EP 2 674 788 A2

FIG. 2D

EP 2 674 788 A2

FIG. 2E

FIG. 3A

EP 2 674 788 A2

FIG. 3B

FIG. 3C

FIG. 3D

FIG. 3E

FIG. 4A

FIG. 4B

EP 2 674 788 A2

derive values of an upgoing wavefield at a plurality of different locations from scattered wavefield data obtained by a plurality of underwater sensors at the plurality of different locations 510

derive values of a downgoing wavefield at the plurality of different locations from the scattered wavefield data at the plurality of different locations 520

extrapolate the values of the upgoing wavefield at the plurality of different locations to extrapolated values of the upgoing wavefield at a plurality of first locations 530

extrapolate the values of the downgoing wavefield at the plurality of different locations to extrapolated values of the downgoing wavefield at a plurality of second locations 540

determine one or more surface-related multiple wavefield contributions at a plurality of third locations from the extrapolated values of the upgoing wavefield at the plurality of first locations and the extrapolated values of the downgoing wavefield at the plurality of second locations 550

## FIG. 5

# FIG. 6

EP 2 674 788 A2

FIG. 7

EP 2 674 788 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110110189 A

**Non-patent literature cited in the description**

- **J. T. FOKKEMA ; VAN DEN BERG.** Seismic Applications of Acoustic Reciprocity. ELSEVIER, 1993